# EUROPEAN PATENT APPLICATION

(11) **EP 0 646 934 A1**
(43) Date of publication of application: **05.04.1995**
(21) Application number: 93307829.7
(22) Date of filing: 01.10.1993
(51) Int. Cl.: G21F 9/12, B01D 15/00, C02F 1/28

(54) **A method of treating water containing radioactive constituents**

(71) Applicant: JCI LIMITED, Johannesburg, Transvaal (ZA)
(72) Inventor: Everett, Dennys John, ZA-Johannesburg (Transvaal) (ZA); Gussman, Heinz Werner, ZA-Johannesburg (Transvaal) (ZA)
(74) Representative: Pidgeon, Robert John

(57) **Abstract**

This invention provides a method of treating water containing at least one dissolved radioactive species, which includes a first step of bringing the untreated water into contact with pyrolusite particles by forming a slurry in which the content of the radioactive species in the water is reduced. The pyrolusite particles are separated from the treated water, preferably by gravity separation, and may be recovered as a thickened pulp for treating further raw or partially treated water. The invention lends itself in particular to treating water extracted from underground mine workings.

## Description

### FIELD OF THE INVENTION

This invention relates to a method of treating water. More particularly the invention relates to a method of treating water containing radioactive constituents such as dissolved species of radium and uranium and their nuclear decay products.

### BACKGROUND TO THE INVENTION

During underground mining operations naturally occurring subterranean water stored in dolomitic compartments, for example, finds it way into the stopes and mined out areas traversing these compartments. This water becomes mixed with spent mine service water, the total volume of which has to be pumped out of the mine workings for re-use or disposal.

When the ore body being mined contains naturally occurring radioactive elements these tend to be leached into the water entering the mine workings. The presence of these elements in water extracted from underground is generally objectionable and its quality does not generally permit its re-use or release for disposal without at least partial removal of these mineral contaminants.

Manganese dioxide is one of several known solids having the property of adsorbing cations of uranium and other heavy metals dissolved in water. Development work in this regard has generally focussed on improving the adsorption capacity and selectivity of synthetic manganese dioxide products. These are generally suitable for treating relatively small amounts of heavily contaminated water, emanating from nuclear fuel processing plants or nuclear power stations, for example.

Untreated water is generally brought into contact with relatively pure or modified manganese dioxide particles in packed beds which may be backwashed periodically to maintain acceptable liquid throughputs. Processes of this type are generally unsuitable, however, for treating large quantities of water having relatively low, yet still unacceptable levels of radioactive contaminants, together with generally innocuous, suspended particles or debris, which would foul the flow passages in a packed bed.

The ultimate disposal of material having radioactive materials adsorbed on it presents a separate problem. Relatively small amounts of highly active adsorption with high loads of radioactive materials may be regenerated or disposed of with comparative ease. It is not practically feasible, however, to deal as readily with larger quantities of contaminated adsorbents suitable for treating large tonnages of effluent water intended for discharge into rivers, for example.

This invention seeks to provide a cost-effective method of treating relatively large tonnages of water containing at least one dissolved radioactive species in order to make it acceptable for re-use or disposal while meeting generally accepted water quality standards.

### SUMMARY OF THE INVENTION

The present invention provides a method of treating water containing at least one dissolved radioactive species through contact with manganese dioxide characterised by the step of forming a slurry in which pyrolusite particles are suspended in the untreated water, whereby the content of the radioactive species in the water is reduced, before separating the pyrolusite particles from the treated water.

The pyrolusite particles are preferably derived from an upgraded ore, and may contain between 15 and 45% MnO₂, preferably between 28% and 45% MnO₂. These particles may further include other constituents containing elements such as calcium (Ca) and iron (Fe) together with silica (SiO₂).

The pyrolusite particle sizes are preferably greater than 10 µm, 90% of the particles (by mass) preferably having a diameter of less than 75µm.

The water may be brought into contact with the pyrolusite particles by mixing it with an existing pulp containing the particles in an agitated aqueous suspension in a vessel eg a Pachuca tank of the kind used in mineral processing operations. The pyrolusite particles may be separated from the treated water by gravity separation. This may simply involve discontinuing agitation of the pyrolusite/water slurry and allowing the pyrolusite particles to settle before extracting the supernatant water from the vessel.

In a further embodiment of the invention separation of the pyrolusite particles from the treated water may be effected in a continuous process by feeding the pyrolusite/water slurry to a clarifier and recovering the pyrolusite particles in the clarifier underflow as an aqueous pulp, and the treated water as an overflow product. The aqueous pulp may be re-used for reducing the content of at least one radioactive species in water. This water may be raw, untreated water, or partially treated water from which the radioactive species has been partially removed in a similar, preceding treatment step.

The water separated from the pyrolusite particles may be subjected to further similar steps whereby it is brought into contact with at least one further batch of pyrolusite particles to form a slurry in which the content of the radioactive species is further reduced before being separated from these particles thereby achieving a further reduction in the content of at least one of the radioactive species in the water.

After extensive contact with untreated or partially treated water the pyrolusite particles lose their capacity to adsorb further radioactive species from the water. The process according to the invention may be sustained by at least partially replacing the pyrolusite particles with fresh pyrolusite. The spent pyrolusite may be added to a uranium leaching circuit, where it is consumed while releasing the adsorbed radioactive species and recovering the downstream by means of known processing means.

The invention is described below by way of example with reference to two preferred embodiments.

### BRIEF DESCRIPTION OF THE DRAWINGS

In the accompanying schematic drawings:
- **Figure 1** shows a schematic illustration of a first step in a batch-treatment process according to the invention for treating water containing at least one dissolved radioactive species;
- **Figure 2** shows a schematic illustration of a subsequent step in the process illustrated by **Figure 1**;
- **Figure 3** shows a schematic illustration of a continuous process according to the invention for treating water containing at least one dissolved radioactive species; and
- **Figure 4** shows a schematic illustration of a continuous, counter-current process based on the process illustrated in **figure 3**.

### DESCRIPTION OF PREFERRED EMBODIMENTS

In bench-scale trials conducted by the applicant on dolomitic water extracted from the mine workings of its Western Areas Gold Mine it was found that the levels of both dissolved radium and uranium species were substantially reduced through contact with ground pyrolusite ore obtained from the Western Transvaal region of South Africa.

This pyrolusite had a manganese dioxide content of approximately 35% and had been milled so that approximately 90% of the milled product passed through a 200 Tyler mesh screen, corresponding to a particle diameter of approximately 75µm. The particular pyrolusite used further included constituents of silica and iron and calcium bearing minerals.

1 litre aliquots of the untreated, dolomitic water were mixed in a slurry containing 100, 200 and 300 gramme batches of pyrolusite and kept agitated for half hourly periods before being allowed to settle. A flocculent known by the trade name of Magnafloc 35 l was at added concentrations between 20 and 30 grammes per kiliogramme pyrolusite, to promote the settling of the pyrolusite. Clear product water was decanted and the process repeated in hourly cycles using a new batch of untreated water each time. The decanted water obtained by each treatment cycle was analysed for uranium and radium.

The uranium levels of the untreated water ranged from 1200 to 1240µg U₃O₈ per litre. Initial levels of residual uranium in the treated water were in the order of 20 to 40µg U₃O₈ per litre and progressively increased to between 90 and 450µg U₃O₈ per litre after 25 hours, the lower and upper levels corresponding respectively to the 300 gramme and 100 gramme pyrolusite batch sizes. The uranium level of water treated with the 200 gramme batch of pyrolusite was in the region of 150µg U₃O₈ per litre towards the end of the 25 hour trial period.

The initial radium concentrations of the untreated water used for these trials were in the region of 95 to 130 pCi/litre and the residual levels of radium after treatment were generally below 0.5pCi/litre in all three trials throughout the 25 hour trial period.

Three further similar trials were conducted using 200 grammes of the same type of pyrolusite throughout, and 1 litre aliquots of untreated water. The contact times for each trial wore held, however, at 15, 30 and 60 minutes respectively.

The concentration of uranium in the untreated water, which ranged from 1425 to 1450µg U₃O₈ per litre was initially reduced to below 50µg U₃O₈ per litre. After 25 hourly cycles the uranium content of the treated water ranged from 50 to 650µg U₃O₈ per litre, the lower and upper uranium levels corresponding respectively to the contact times of 60 and 15 minutes. The residual uranium concentration at contact times of 30 minutes per cycle was again in the region of 150µg U₃O₈ per litre, approximately matching the levels achieved during the previously discussed trials.

In yet a further trial water from the same source was treated in two successive stages. In each stage a batch of 200 grammes pyrolusite of the same type as that used In the previous trials was used. In the first stage 1 litre aliquots of untreated water were formed into a slurry with the pyrolusite for contact times of 30 minutes under continuous agitation before the pyrolusite was allowed to settle. Approximately 1 litre of clarified product water was subsequently decanted and transferred to a vessel containing the second batch of pyrolusite and again formed into a slurry for a further period of 30 minutes of continuous agitation. The clarified water remaining after the pyrolusite had been allowed to settle was analysed for uranium and radium. Successive one litre aliquots of untreated water were subjected to this treatment process at hourly intervals and similarly analysed.

The uranium content of the untreated water throughout this trial ranged from 600 to 1050µg U₃O₈ per litre. The uranium levels of the treated water obtained after the first stage ranged progressively from about 25 to 140µg U₃O₈ per litre over an initial 100 hour trial period. These levels were substantially reduced by the second stage of treatment, and ranged from 10 to 80µg U₃O₈ per litre over a full 150 hour trial period. The uranium loadings on the pyrolusite were determined at the end of the 100 and 150 hour operating periods and found to be respectively 0,65 and 0,8 grammes U₃O₈ per kilogramme pyrolusite used in the first stage, and 0,03 and 0,05 grammes U₃O₈ per kilogramme for the second stage.

The radium content of the untreated water ranged from 98 to 130 pCi/litre, generally increasing as the trial progressed. The radium content obtained after the second stage of treatment increased steadily from 0,2 to 1,0 pCi/litre over the 150 hour trial period. (Analyses for radium in the water obtained from the first stage of treatment were not done during these trials.)

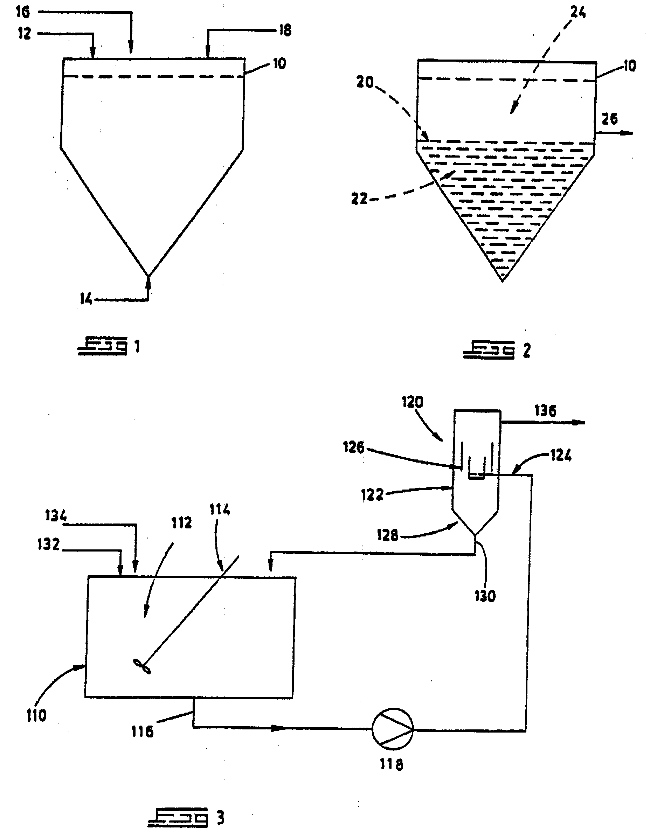

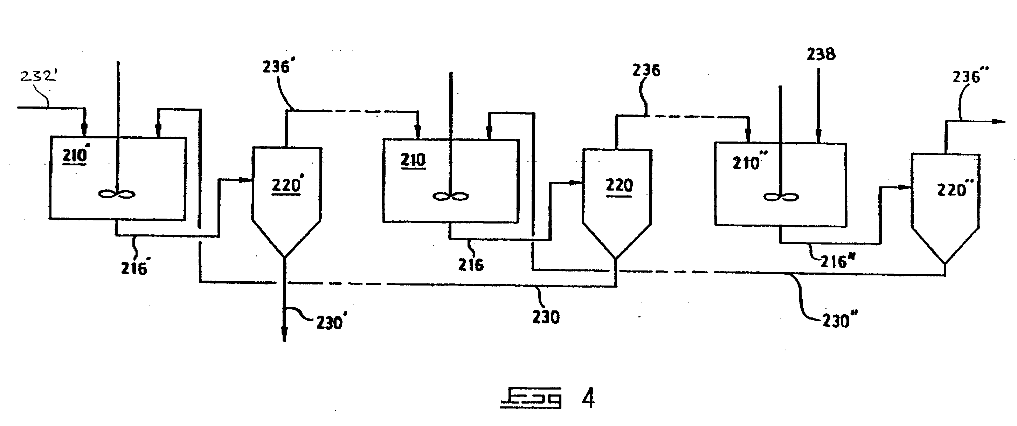

In a first embodiment of the invention illustrated in **figures 1** and **2** dolomitic water is treated in a batch-wise process in repetitive cycles on a an industrial scale. A Pachuca tank 10 having a capacity in the order of 600 to 700 cubic metres is charged with a slurry (flow-line 12) containing approximately 120 tonnes of pyrolusite of the type described above, and approximately 200 tonnes of partially treated water. A stream of compressed air (flow-line 14) is infected towards the base of the tank 10 in order to keep the pyrolusite suspended in the slurry.

A batch of between 200 and 300 tonnes of untreated water (flow-line 16) is charged into the Pochuca tank, bringing the overall volume of the contents of the tank 10 to approximately 600 cubic metres, the concentration of pyrolusite being in the order of 200 grammes per litre, as for the bench-scale tests described above.

A solution of the flocculent referred to above is dosed into the tank 10 (flow-line 18) in order to achieve a flocculent concentration in the range of 5 to 30 grammes per tonne pyrolusite. Additional flocculent may be added to the Pachuca tank 10 in between subsequent treatment cycles in order to promote flocculation of the pyrolusite particles.

After the untreated water has been held in the Pachuca tank 10 and thoroughly mixed with the pyrolusite slurry and flocculent for a period of approximately 30 minutes, the air supply 14 is shut down in order to allow the flocculated pyrolusite to settle out in the tank. An interface 20 is formed defining a lower layer 22 of thickened pyrolusite pulp and an upper layer 24 of clarified treated water. The layer 24 constitutes approximately 40% of the overall contents of the tank 10.

A volume of treated water substantially equal to the volume of untreated water initially received in the tank 10 is decanted from the layer 24 as product water (denoted by flow-line 26), the bulk of the dissolved radioactive species having been removed.

After removal of the treated water 26 the tank 10 is ready for commencement of the next treatment cycle. The process described above is designed to allow 12 such cycles per day over a period of approximately 17 days before replacement of the pyrolusite becomes necessary. This is based on an average pyrolusite loading of 0,6µg U₃O₈ per litre pyrolusite and an initial concentration of 1400µg U₃O₈ per litre of untreated water. The treated water quality, averaged out over this time period is expected to be below 190µg U₃O₈ per litre of treated water, which is considered acceptable.

In a further embodiment of the invention illustrated schematically in **Figure 3** a continuous process is shown for removing uranyl species from untreated water. In a pilot-scale installation operated by the applicant a holding tank 110 having a capacity of approximately 0,5 cubic metres is provided for receiving a batch of approximately 100 kg pyrolusite dispersed in a slurry within a treatment space 112 defined by the tank.

The slurry is kept in suspension by means of a mechanical paddle-type stirrer 114 extending into the treatment space 112. An underflow pipe 116 located towards the base of the tank 110 permits withdrawal of the slurry from the treatment space 112 by way of a transfer pump 118 delivering the slurry to a clarifier 120.

The clarifier 120 includes a vertical cylindrical portion 122 of circular cross-section into which a feed pipe 124 extended horizontally. The feed pipe 124 discharges the slurry into a central region of the clarifier 120, which further includes modifications generally denoted by reference numeral 126 arranged in the region of discharge of the feed pipe 124 in order to promote rapid separation of the treated water from the pyrolusite particles.

In a trial run untreated water containing dissolved uranium and radium (denoted by flow-line 132) was fed to the holding tank 110 which flocculent was dosed into the tank as illustrated by the flow-line 134 in order to achieve an approximate flocculent concentration ranging from 20 to 30 grammes per tonne of pyrolusite. A stream of slurry was continuously withdrawn from the tank 110 and fed to the clarifier 120 for separation of the treated water from the slurry.

Under steady operating conditions an interface defining an upper layer of clarified product water and a lower layer of thickened pyrolusite pulp was formed. The thickened pyrolusite pulp was withdrawn from the clarifier 120 via an outlet in the region of its conical base 128 from where it was re-cycled to the holding tank 110 by way of an underflow pipe 130. The clarified water withdrawn from the upper region of the clarifier 120 was substantially freed of pyrolusite particles.

In a trial run of this process the following results were reported:

| **Feed water** | |
|---|---|
| Uranium concentration: | 680 - 690 (µg U₃O₈ per litre) |
| Radium concentration: | 98 - 130 (pCi/R) |
| Flow rate: | 1,0 (cubic metres per hour) |
| Mean residence time in holding tank: | 30 (minutes) |

| **Pyrolusite slurry** | |
|---|---|
| Solids content in holding tank underflow: | 15-20% (by mass) |
| Solids content in clarifier underflow: | 30-40% (by mass) |
| Slurry flow rate from holding tank to clarifier: | 2,0 (cubic metres per hour) |

| **Flocculent]** | |
|---|---|
| Dosing rate: | approximately 10 (g/h) |

| **Product water** | |
|---|---|
| Uranium concentration: | below 25µg U₃O₈ per litre |
| Radium concentration: | below 0,5 pCi/litre |

These results substantially confirm what was found during the bench-scale trials and the applicant believes that the pilot-scale equipment can be successfully scaled up to treat larger volumes of similar types of water. In a particularly preferred process several holding tanks generally denoted by reference numeral 210 and clarifiers generally denoted by reference numeral 220 ( corresponding respectively to the tank 110 and clarifier 120 in **figure 3**) can be linked in a countercurrent arrangement illustrated in **figure 4**.

A stream of untreated water (denoted by flow-line 232') is fed to a first holding tank 210' containing pyrolusite slurry of the type described above, and having the highest loading of radioactive species in the process. After an approximate residence time of 30 minutes this pyrolusite is transferred to a clarifier 220' and withdrawn from the process for disposal in the form of a thickened underflow pulp (denoted by flow-line 230').

In a particularly preferred process according to the invention the loaded pyrolusite is utilized as an oxidant in an available uranium extraction and recovery circurit. The use of manganese dioxide for treating uranium-bearing ore by means of a sulphuric acid leaching step is wall documented. More particularly poorly soluble minerals containing tetravalent uranium are converted to hexavalent species by the following general reaction:

2 Fe²⁺ + MnO₂ + 4H⁺ → 2 Fe³⁺ + Mn²⁺ + 2H₂O

UO₂ + 2 Fe³⁺ → UO₂²⁺ + 2 Fe²⁺

The pyrolusite decomposes in the course of this reaction, producing a water-soluble manganese salt while leaving a substantially insoluble residue of impurities, which report in the gangue material of the leaching process after a solid-liquid separation step.

The uranium adsorbed on the pyrolusite during the preceding water treatment steps is conveniently recovered by ion-exchange, solvent extraction and precipitation steps employed in known uranium extraction and recovery processes. Any dissolved radioactive species not amenable to treatment in the same manner will eventually find their way to the tailings dam of the uranium extraction process, where they are disposed of in a confined area with minimal risk of contaminating the water supply to other users.

Returning to the description of **figure 4**, a stream of partially treated, clarified water is transferred from the clarifier 220' to a downstream holding tank 210 (flow-line 236') and mixed with a batch of pyrolusite pulp drawn as an underflow stream from a clarifier 220''.

The pyrolusite particles of this pulp have a lower loading of radioactive species than those in the holding tank 210'. The slurry in the tank 210 is withdrawn as a continuous stream after an approximate residence time of 30 minutes and fed to a clarifier 220 from which a thickened pyrolusite pulp, partially loaded with water-soluble radioactive species is transferred upstream to the holding tank 210' (flow-line 230).

Water from the clarifier 220, which is substantially freed of pyrolusite (flow-line 236) progresses downstream to a further holding tank similar to tank 210 (not shown) while a partially loaded pyrolusite pulp derived from a downstream clarifier such as clarifier 220', is received into the holding tank 210 in order to balance the process streams of the system described so far.

An optional number of holding tanks 210 and clarifiers 220 can be linked to each other in similar fashion allowing pyrolusite particles and water to be brought into contact with each other in counter-current flow relationship. The stream of finally treated water (flow-line 236'') leaving the final clarifier 220'' has the lowest content of dissolved radioactive species. Fresh pyrolusite (flow-line 238) is fed into the holding tank 210'' and mixed with water received from an upstream clarifier (flow-line 236) before being withdrawn from the holding tank as a pyrolusite slurry (flow-line 216''), which is fed to the clarifier 220''. The thickened clarifier underflow pulp (flow-line 230'') is transferred to art upstream holding tank such as tank 210 in a stream corresponding to the flow stream 230.

It is evident from **figure 4** that in the simplest case the process may be reduced to a two-stage process utilising only the two holding tanks 210' and 210'' and the clarifiers 220' and 220''. The process may, however, be readily adapted by interposing any chosen number of holding tanks 210 and clarifiers 220 following the configuration described with reference to **figure 4**.

The inventors believe that the process described above may be employed advantageously for treating water contaminated with radioactive constituents such as uranium or radium, which has been extracted from underground mine workings. The use of mineral pyrolusite is expected to make these processes more cost-effective than comparable processes using highly refined or synthetic manganese dioxide.

Furthermore, mining operations are generally equipped with crushing, sizing and separating facilities for sufficiently upgrading raw pyrolusite to a pyrolusite suitable for use in these processes. Since the operating personnel of mines with ore-upgrading facilities are generally familiar with the unit operations involved in the processes described above, the inventors believe that these processes lend themselves for use in existing mining operations.

Its is conceivable that processes using materials other than pyrolusite for adsorbing dissolved radioactive materials contained in contaminated sources of water may be feasible. Disposal of the adsorption material presents a new problem, however, which is generally aggravated by the fact that radiation levels of this material are higher than those of the untreated water. The inventors believe that the preferred process described above, by consuming loaded pyrolusite in an existing uranium leaching process, overcomes these difficulties.

A reader skilled in the art will appreciate that the processes described above may nevertheless be adapted to a variety of different applications for providing batch-wise, semi-continuous or fully-continuous methods of treatment for removing radioactive species from water. The scope of the present invention should accordingly not be construed as being limited in scope to the preferred embodiments described above.

## Claims

1. A method of treating water containing at least one dissolved radioactive species through contact with manganese dioxide characterised by the step of forming a slurry in which pyrolusite particles are suspended in the untreated water, whereby the content of the radioactive species in the water is reduced, before separating the pyrolusite particles from the treated water.

2. A method according to claim 1 in which the untreated water is added to a pulp containing the pyrolusite particles in an agitated aqueous suspension in order to achieve contact between the untreated water and the pyrolusite particles.

3. A method according to claim 1 or claim 2 in which the pyrolusite particles are separated from the treated water by gravity separation.

4. A method according to any of the preceding claims in which separation of the pyrolusite particles from the treated water is effected by a continuous process in which the slurry is fed to a clarifier and the pyrolusite particles are recovered in the clarifier underflow as an aqueous pulp, and the treated water is recovered as an overflow product.

5. A method according to claim 4 in which the aqueous pulp is re-used in a further step for reducing the content of at least one of the dissolved radioactive species in water.

6. A method according to claim 4 in which the treated water is subjected to at least one further treatment step whereby it is brought into contact with at least one further batch of pyrolusite particles to form a slurry in which the content of the radioactive species is further reduced, and separating the pyrolusite particles from the treated water.

7. A method according to any of the preceding claims in which the pyrolusite particles contain between 15 and 45% manganese dioxide.

8. A method according to any of the preceding claims in which the size of the pyrolusite particles is at least 10µm and 90% of the particles (by mass) have a diameter of less than 75µm.

9. A process according to any one of claims 1 to 8 characterised by the further steps of recovering pyrolusite particles which have been in contact with the untreated or partially treated water, and introducing these into a leaching process in which the pyrolusite is consumed while releasing any adsorbed radioactive species.
